# EUROPEAN PATENT SPECIFICATION

(11) **EP 1 790 621 B1**
(45) Date of publication and mention of the grant of the patent: **13.01.2010**
(21) Application number: 05425848.8
(22) Date of filing: 29.11.2005
(51) Int. Cl.: C04B 2/12, F27B 1/00

(54) **Burner beam for a burning kiln for lump material**
Brennerträger für einen Ofen zum Brennen von stückigem Gut
Poutre brûleur pour un four pour calciner des matières solides

(43) Date of publication of application: 30.05.2007
(73) Proprietor: Terruzzi Fercalx S.p.A., 20121 Milano (IT)
(72) Inventor: Teruzzi, Daniele, 24050 Spirano (IT); Ragno, Spiridione, 24050 Spirano (IT)
(74) Representative: Long, Giorgio

(56) References cited:
- US-A- 2 108 118
- US-A- 3 260 514
- US-A- 3 284 071
- US-A- 3 356 351
- US-A- 4 414 186

## Description

### FIELD OF THE INVENTION

The present invention relates to a burner beam for a kiln for burning lump material. In particular, the invention relates to a burner beam for a kiln for burning and sintering lump material such as limestone, dolomite, and the like, which allows the combustion to be made even and controlled throughout the kiln burning area. Furthermore, the invention relates to a method for controlling the combustion reaction in said kiln.

### BACKGROUND OF THE INVENTION

When treating said materials such as for producing lime, or more in general, for eliminating volatiles from a solid substance, pieces of the material to be treated are known to be loaded in kilns where they are subjected to a heat treatment.

Particularly, lime production derives from the known burning process (calcinations) of natural limestone CaCO₃ for obtaining lime CaO due to the reaction:

CaCO₃ + heat - > CaO + CO₂

which is usually carried out in a shaft kiln with circular, semi-circular, elliptical, square or rectangular section, double-shaft kiln, regenerative kiln or annular kiln.

Said lump calcareous, dolomite materials or the like are top-loaded in a kiln extending along a substantially vertical longitudinal axis. The material is sequentially passed, from the top down, through a pre-heating area, a combustion area (calcination) placed between two or three levels of burners, a post-combustion area, a cooling area and an outlet area for the calcined material.

The combustion area is delimited by two or more combustion levels that are defined by burner beams being positioned transversal to the longitudinal axis of the kiln and dipped in the bed of material to be treated.

The burner beams are box structures having a cross section which is usually rectangular or T-shaped, the inner space thereof being intended for housing the burners. In general, the burners are represented by tubes, also called lances, which are opened at windows obtained on the side or lower walls of the beams. The fuel which will be ignited in the vicinity of said beams is delivered through these apertures and windows.

Such a burner beam is known for example from US 3260514.

The resulting quantity and quality of the lime mainly derive from the operation of said beams, and thus from the level of combustion developed therefrom or, in other words, from the efficacy of the beams.

In fact, it has been observed in studies of mathematical models that the heat transfer may not be optimum within the kiln. Particularly, it has been demonstrated that in a depressurized kiln, i.e. a kiln where the hot gases are sucked upwards, the combustion temperature may result substantially lower in the area above each beam than in the other areas surrounding the beams. Following these observations, it might result that the material may be subjected to a differentiated heat treatment when being fed downwards along the kiln, thereby resulting in a final product that is not evenly burned. This may result in uneven quality of the final product.

### SUMMARY OF THE INVENTION

Accordingly, the problem at the heart of the present invention is to provide a final product with characteristics of particular uniform quality (reactivity, crystallization, etc.).

This problem is solved by burner beams allowing the uniform burning of lump materials in all the burning areas in a burning kiln for lump materials, such as claimed in the annexed independent claim.

Accordingly, a first object of the present invention is to provide burner beams for a burning kiln for lump materials.

A second object of the invention is to provide a method for controlling the combustion reaction in said kiln.

### BRIEF DESCRIPTION OF THE DRAWINGS

Further characteristics and advantages of the present invention will be better understood from the description below of some embodiments of the invention, which are given as non-limiting examples with reference to the following figures in which:
- Fig. 1 is a schematic view of a burning kiln for lump materials;
- Fig. 2A is a cross-sectional view of a first embodiment of the burner beam for a burning kiln for lump material in accordance with the invention;
- Fig. 2B is a first variant embodiment of the beam from Fig. 2A;
- Fig. 2C is a second variant embodiment of the beam from Fig. 2A;
- Fig. 2D is a third variant embodiment of the beam from Fig. 2A;
- Fig. 2E is a cut-away, perspective partial view of the beam from Fig. 2A;
- Fig. 2F is a perspective partial view of the beam from Fig. 2A;
- Fig. 3A is a cross-sectional view of a beam in accordance with a second embodiment of the invention;
- Fig. 3B is a first variant embodiment of the beam from Fig. 3A;
- Fig. 3C is a second variant embodiment of the beam from Fig. 3A;
- Fig. 3D is a third variant embodiment of the beam from Fig. 3A;
- Fig. 4A is a cross-sectional view of a beam in accordance with a third embodiment of the invention;
- Fig. 4B is a variant embodiment of the beam from Fig. 2A;
- Fig. 5A is a cross-sectional view of a beam in accordance with a fourth embodiment of the invention;
- Fig. 5B is a variant embodiment of the beam from Fig. 5A;
- Fig. 6A is a cross-sectional view of a beam in accordance with a fifth embodiment of the invention;
- Fig. 6B is a first variant embodiment of the beam from Fig. 6A;
- Fig. 6C is a second variant embodiment of the beam from Fig. 6A;
- Fig. 6D is a third variant embodiment of the beam from Fig. 6A;
- Fig. 7 is a cross-sectional view of a beam in accordance with a sixth embodiment of the invention;
- Fig. 8A is a seventh embodiment of the inventive beam;
- Fig. 8B is a variant embodiment of the beam from Fig. 8A;
- Fig. 9 is a schematic view of the operation of a burner beam according to the prior art;
- Fig. 10 is a schematic view of the operation of a burner beam according to the present invention;
- Fig. 11 is a schematic view of the fuel flow control system for each inventive beam.

### DETAILED DESCRIPTION OF THE INVENTION

The idea at the heart of the present invention is to design a burner beam allowing the combustion level to be uniformed substantially throughout the combustion area of a burning kiln for lump materials.

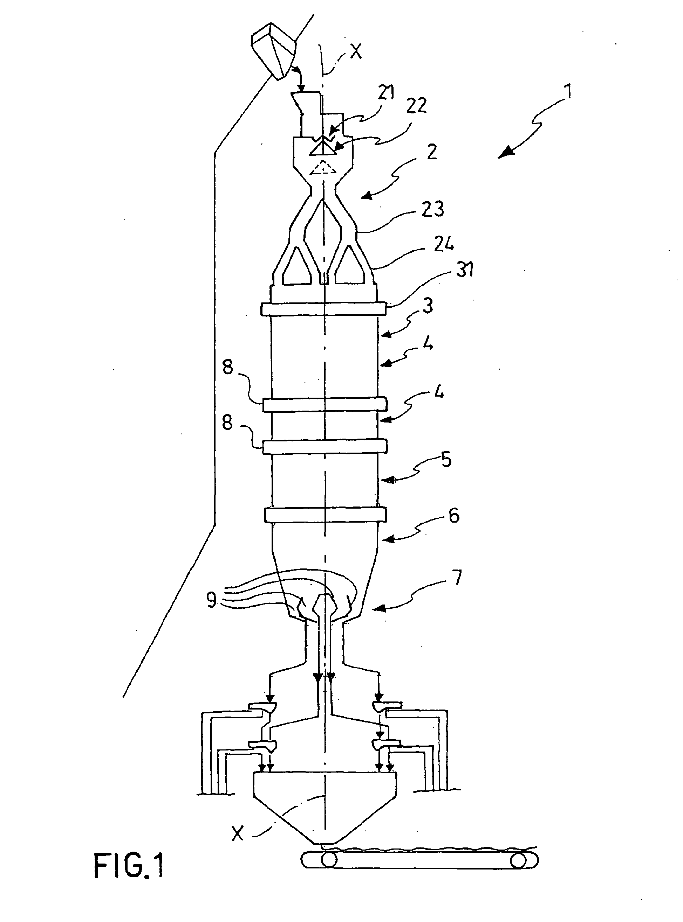

A kiln 1 for burning lump materials, such as illustrated in Fig. 1, can be any conventional kiln for burning lump materials such as calcareous or dolomite materials. Particularly, the kiln from Fig. 1 is a shaft furnace with circular, semi-circular, square or rectangular section extending substantially vertically along an axis X-X and comprises from the top down an inlet area 2, a pre-heating area 3, a combustion area 4, a post-calcination area 5, a cooling area 6 and an outlet area 7.

The inlet area 2 may be provided with an inlet aperture 21 equipped with a conical door 22 for opening/closing the passageway for the lump material. Preferably, below the door 22, the lump material is fed to the pre-heating area 3 within the kiln through one or more deviating conduits 23 that can branch in secondary conduits 24, thereby allowing the material to be uniformly fed to each portion of the kiln cross-section.

The pre-heating area 3 is that area where the materials come in contact with the rising hot fumes, due to the depressurization (schematically represented in Fig. 1) being caused for example by one or more suction beams 31, which fumes are generated in the combustion area 4. Thereby, the materials are already pre-heated when they reach the combustion/calcination area.

The calcinations area 4 is the area where the calcinations or burning of the lump materials is carried out due to the action of burners 8 (which are schematically illustrated) that are arranged on two levels. The actual burning of the materials is carried out in this area.

The post-calcination area 5 is that area where the material is kept still for a long time so that the calcination reaction is brought to completion.

The cooling area 6 is an area where the processed material comes in contact with cool air coming from the bottom of the kiln.

The outlet area 7 is an end area of the kiln from which the finished material is automatically discharged by means of one or more conventional discharge hoppers 9 such as schematically illustrated in Fig. 1.

Particularly, in order to obtain an optimum uniform level of combustion in each part of the kiln combustion area, a burner beam has been designed that comprises fuel feeding means which are directly coupled with first oxidizer feeding means for feeding a fuel/oxidizer mixture with a low amount of oxidizer, and separate second means for delivering further fuel and being positioned downstream of said fuel feeding means and said first oxidizer feeding means according to the flow of said mixture such that the fuel/oxidizer mixture is enriched and the fuel combustion is brought to completion.

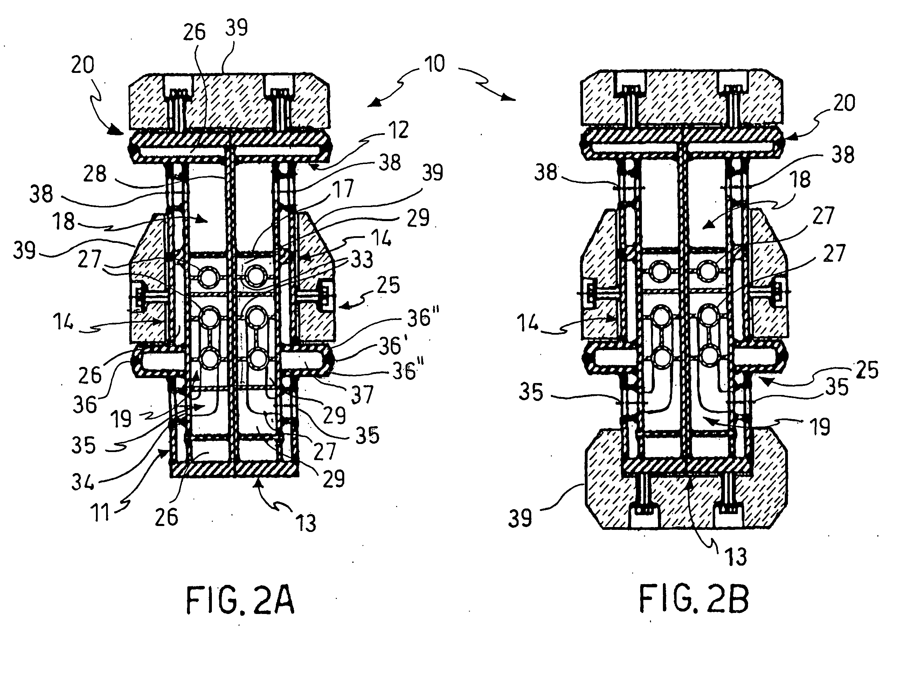

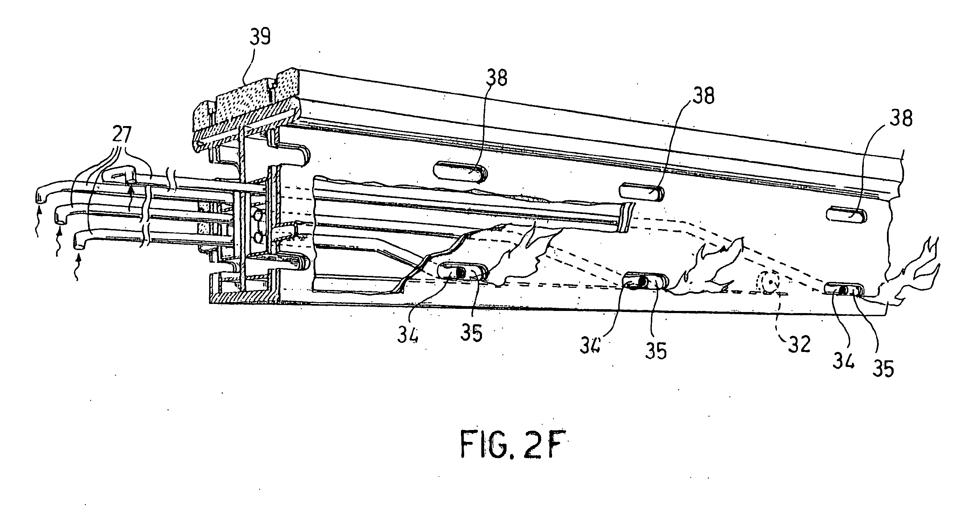

With reference to Fig. 2A-2F, the burner beams 10 of the invention extend longitudinally along an axis Y-Y, as best seen in Fig. 2F and consist of a box member 11 comprising an upper wall 12, a lower wall 13, two side walls 14, a front wall and a rear wall (the latter two are not illustrated in the figures) which are suitable to define an inner space divided into upper space 18 and lower space 19 by a horizontal longitudinal partition wall 17.

Such as shown in Fig. 2A, the beam 10 has a T-shaped cross-section with a head 20 and a stem 25. Both the head and the stem are provided with gaps 26 for a cooling fluid to pass therethrough. The cooling fluid may flow through the gaps following any path, which is known per sé, either as desired or selected according to particular requirements.

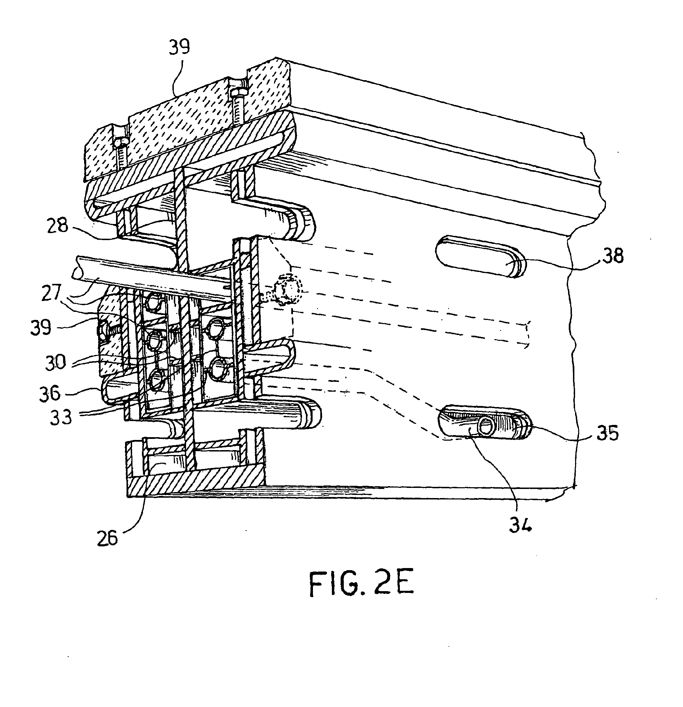

The stem 25 of the beams 10, as stated above, is internally divided by the horizontal longitudinal partition wall 17 in the empty, upper space 18 and the lower space 19, which is suitable to house one or more burner lances 27 intended to feed the oxidizer, as best seen in Fig. 2E and 2F. Furthermore, the shank 25 is further internally partitioned by a vertical longitudinal inner wall 28 such that two mirror inner portions are created. Each of said mirror portions thus comprises half of the empty upper space 18 in which the oxidizer is forced, and half of the lower space 19 comprising two sets of lances 27 arranged parallel to each other, each set consisting of one or more stacked lances.

Particularly, the lances 27 may be advantageously housed in suitable chambers 29 having the function of allowing each lance or set of lances to receive and control a determined amount of oxidizer as well as constantly measuring the same and, therefore, controlling the flow thereof. Consequently, a mixture may be created which can be more or less rich in fuel/oxidizer due to said control according to particular requirements or preferences, such as will be detailed below.

The chambers 29 may be centered and spaced apart within the lower space 19 by means of spacers 30 (illustrated only in Fig. 2E) and optionally slidingly supported on the lower wall 13 of the stem 25 by means of a set of wheels 32 (only one of which is illustrated in Fig. 2F) which also advantageously allow inserting and removing the chambers 29 with the respective lances 27 in/from the beam 10. Furthermore, the lances 27 within the chambers can also be provided with spacers 33 preventing the lances and chamber walls from coming in contact with each other.

As shown in Fig. 2F, the lances 27 have open ends 34 located at first through holes 35 that are formed in each of the two side walls 14 of the beams 10 in different locations along the beams such that the fuel can flow out of the beam from several points and thus penetrate inside the kiln in predetermined locations.

Advantageously, a bracket 36 is placed above said first holes 35 such as to be interposed between said first holes and the head 20 of the beam 10 and create a space for the fuel to penetrate freely within the surrounding bed of material to be burned. Particularly, the bracket 36 is obtained by means of conventional welding 36' of the free ends of two foils 36'' that are arranged parallel to each other such that a space 37 is created therebetween, which allows said cooling fluid to pass therethrough, in the similar manner as with the gaps 26.

Advantageously, the beam 10 of the invention comprises the above-mentioned upper space 18 for the secondary oxidizer to be fed to a position away from the point of delivery of the main fuel/primary oxidizer mixture. In fact, each of the two side walls 14 of the beam are provided with second through holes 38 that are formed below the head 20 of the beam 10 for the secondary oxidizer flowing within the upper space 18 of the stem 25 of the beam 10 to flow out of the beam and reach the fuel/primary oxidizer mixture in that portion in the kiln which is at the same level as the head 20 of the beam, such as will be detailed herein below.

Also in this instance, the upper space 18 can house tubes (not shown) which are placed along the beam, each one opening at the level of one of said second holes 38 such that the delivery of oxidizer can be controlled at every point of the beam in a still more accurate manner.

The beam 10 is advantageously made of high temperature resistant steel, i.e. steel capable of resisting the operating temperatures within the kiln 1. Actually, this steel can be a type of steel resisting temperatures ranging between 200°C and 300°C, since the cooling system allows keeping this temperature steady within the beams. In any case, this kind of steel is known in the field as quality non-alloy steel, special non-alloy steels and special alloy steel. These types of steel are capable of resisting said temperatures and are capable of bearing considerable loads, such that they exhibit a mechanical strength suitable for being used as beams in a kiln such as that described above.

Particularly, steels meeting said requirements are for example steels designated by the alphanumerical designation P275N (No. 1.0486), P275NH (No. 1.0487), P275NH (No. 1.0488), P275NH (No. 1.1104).

As stated above, the beam 10 is cooled by means of a cooling fluid through a conventional circulation system.

Briefly, the cooling fluid is caused to flow under pressure in the above-described gaps 26 and space 37 of the bracket 36 of the beams 10 such as to maintain a constant temperature not exceeding 300°C. The fluid has thus the function of removing the heat generated by the combustion and thus maintaining the beams in an optimum state of preservation and operation.

Preferably, the beam 10 of the invention can comprise a suitable protective covering 39 on the outer surface thereof such as refractory material for protecting the beam against high temperature and combustion reaction that leads to the formation of scaling substances on the beams and reduces the efficacy thereof. The covering 39 can be secured to the head 20 and the side walls 14 of the beam for example by means of conventional bolts, without obviously covering the first 35 and second 38 delivery holes for the fuel/primary oxidizer and secondary oxidizer mixture, such as illustrated in Fig. 2A. Alternatively, the covering can also be secured to the lower wall 13 such that part of the side walls 14 of the beam can be also enveloped such as shown in Fig. 2B.

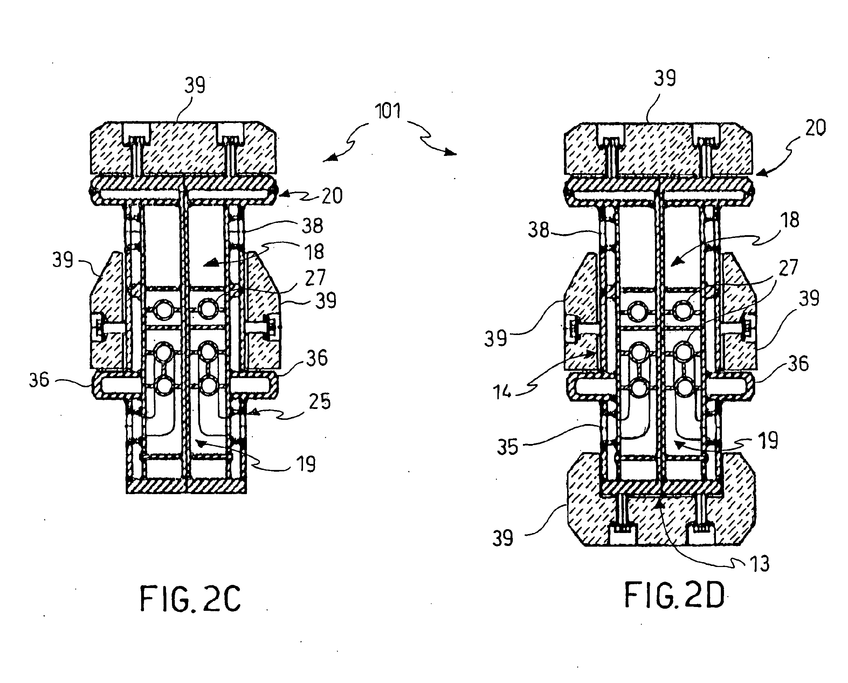

Fig. 2C and 2D illustrate variant embodiments of the embodiments from Fig. 2A and 2B, respectively, in which parts in common are designated with the same numerals. The beam 101 is different in that the bracket 36 above the first holes 35 of the side wall 14 can be manufactured as one piece rather than two pieces welded together. In particular, the bracket is manufactured as one piece from a single steel table that is worked with conventional tools such as to remove the material therein and create the space 37 for said cooling fluid to pass therethrough. Consequently, no welding is carried out and no welding material is added. This advantageously avoids the formation of weakened points due to the presence of added material. Furthermore, the welding does not ensure that the welding material is evenly distributed, thereby increasing the risk of weakening or, however, the risk of different reactions to the stress applied throughout the beam, which is caused by the high temperatures and the load of material to be treated.

In addition, it has been surprisingly found that, in some cases, the weldings may be subjected to firecracks which may be very dangerous when a beam is on operation.

Furthermore, by manufacturing the bracket as one piece the thickness can be advantageously controlled or modulated throughout the bracket and a constant and uniform heat transfer can be obtained between the outside of the beam and the inner space of said bracket in which the cooling fluid flows.

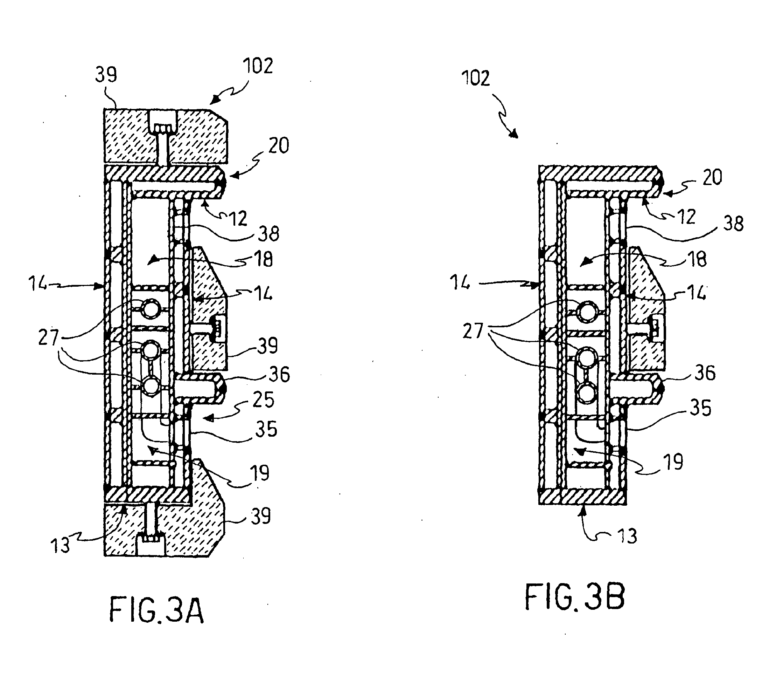

Fig. 3A and 3B illustrate a second embodiment of the inventive beam. Particularly, Fig. 3A and 3B constructively illustrate half-beam 102 from Fig. 2B, i.e. one of the two divided portions of the vertical inner wall 28, therefore they will not be described herein in detail, and the same numerals as in the respective figures designate the same pieces or portions. It should also be noted that the beam 102 from Fig. 3B does not have the covering 39 applied externally to the lower 13 and upper 12 walls.

The advantage deriving from using the beam 102 is that, with this particular structure combustion gases can be produced only on one side of the beam, particularly on the side facing the axis X-X of the kiln 1. Consequently, in particular applications where it is sufficient to have burner lances only on one side of the beam, this advantageously allows one to considerably simplify the construction of the whole kiln assembly as well as reducing the overall dimensions thereby increasing the treatment surface and/or reducing consumption.

Furthermore, a beam of the type described above can be advantageously used in kilns having a circular, semi-circular, elliptical, square or rectangular section, where the beams, being dipped in the material to be treated, run through the section of the kiln in the proximity of the kiln walls. In this way, the needless use of burner lances facing the kiln wall can be avoided, thereby providing only those facing the middle of the kiln. Consequently, the requirement of having outer burners and/or peripheral burners penetrating inside the kiln bed can be also avoided.

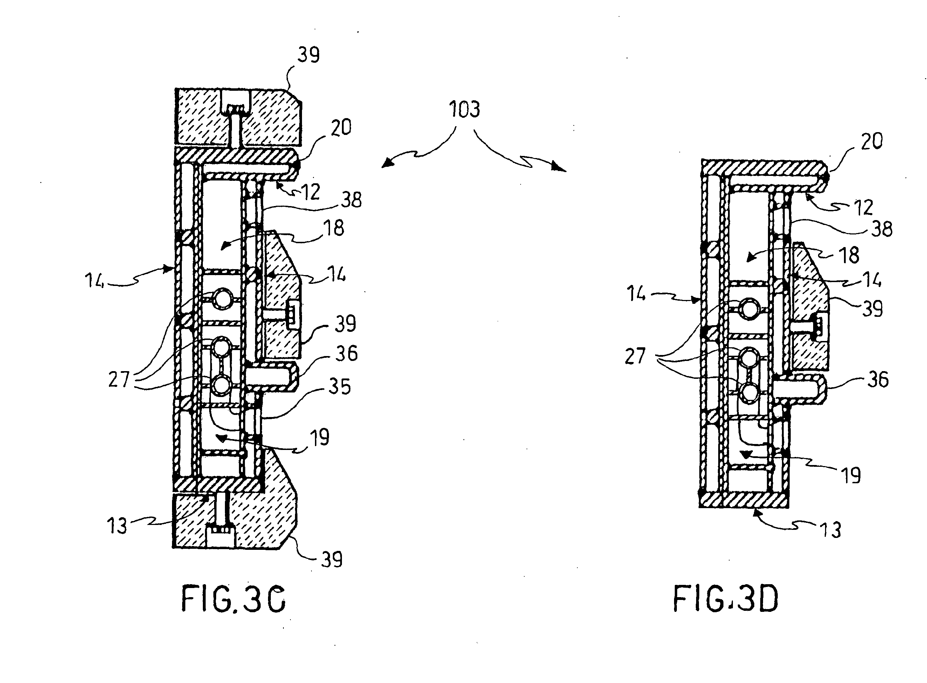

Fig. 3C and 3D illustrate variant beams 103 of the beams from Fig. 3A and 3B, respectively, in which the bracket 36 is manufactured as one piece, such as described above.

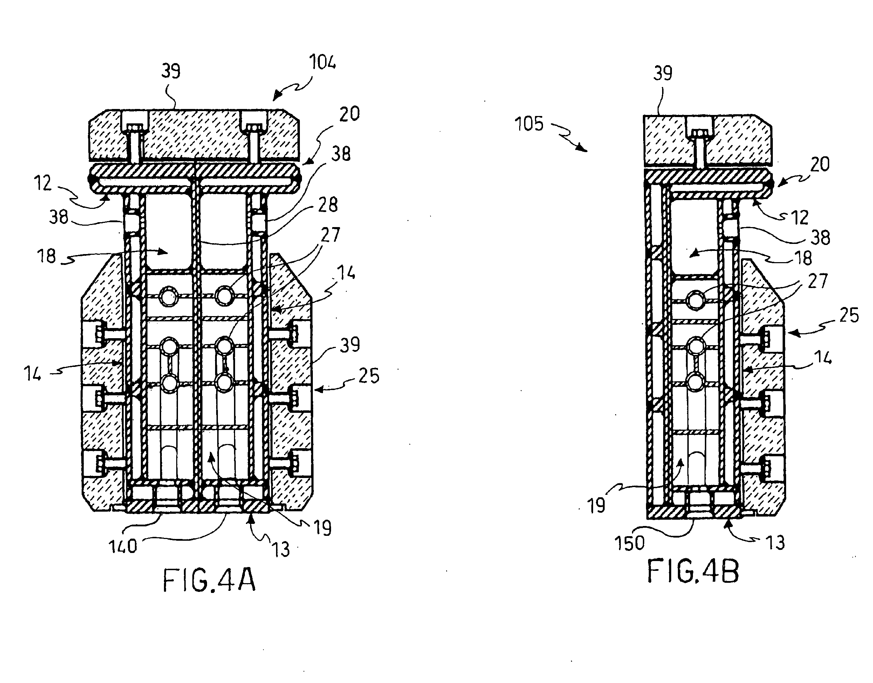

In Fig. 4A there is illustrated a third embodiment of the inventive beam.

The beam is generally indicated with numeral 104 and the parts in common with the beam from Fig. 2A are indicated with the same numerals. The beam 104 is different from the beam from Fig. 2A mainly because the fuel/oxidizer delivery holes 140 are not provided in each side wall 14 of the beam, rather they are formed in two parallel arrays on the lower wall 13, i.e. the one facing the bottom of the kiln. Due to this particular arrangement, the bracket 36 described above can be eliminated. In fact, the lower wall 13 of the beam 104 has the same function of said bracket in that it creates a sufficient space for the fuel/oxidizer mixture to be ignited and develop hot gases laterally rising due to the depressurization existing within the kiln. This solution is particularly advantageous when the use of powder fuel is desired. Furthermore, the covering 39 can substantially cover the whole outer surface of the side walls 14 except the first holes 35 thereby allowing a greater protection to the beam.

Fig. 4B is a variant embodiment of the beam from Fig. 4A, substantially corresponding to half said beam. Particularly, the beam 105 from Fig. 4B has a half-T shaped cross section with only one array of holes 150 for delivering the fuel/primary oxidizer mixture and the vertical inner wall 28 being replaced by a side wall 14. Furthermore, on the other side wall 14, the beam 105 can be covered by covering material 39. As with the beams described with reference to Fig. 3A-3D, also in this case the beam is particularly suitable to be abutted against the wall of the kiln 1 on the side of the side wall 14 being free of refractory material.

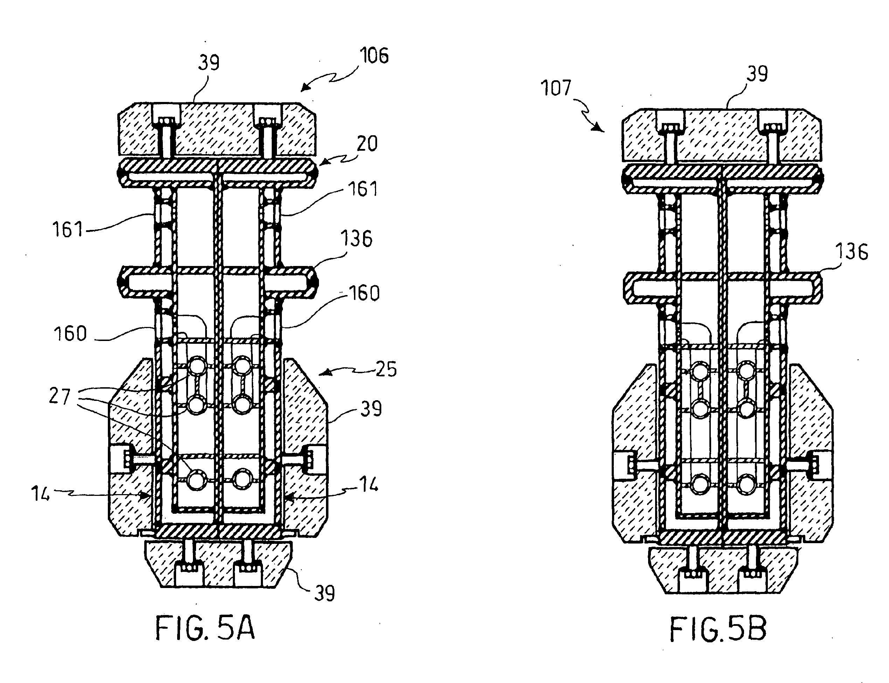

Fig. 5A illustrates a fourth embodiment of the invention in which the beam 106 is similar to the beam 10 from Fig. 2B, whereby the parts in common are designated with the same numerals and will not be further described. The beam 106 is different from the beam 10 from Fig. 2B substantially by the location of the first holes 160 in the side wall 14 for delivering the fuel/primary oxidizer mixture. The first holes 160, in fact, are positioned on each of both side walls 14 in the vicinity of the second holes 161 for delivering the secondary oxidizer. Also in this case, a bracket 136 is interposed between said first 160 and second 161 holes still to the purpose of creating a space that is free of the burned material for the fuel/primary oxidizer mixture to penetrate in the bed of the burned material and be ignited about the beam in a more uniform manner. In other words, the embodiment of the beam 106 results in cross section as two overlapping Ts, similarly as in Fig. 2A-2F. Furthermore, in this case, the covering 39 being secured on the side walls 14 is positioned below the holes 160.

The advantage obtained using this embodiment is that, in particular conditions, the fuel/primary oxidizer mixture can be enriched in secondary oxidizer earlier than in the solutions described above. In fact, since said first 160 and second 161 holes are close to each other, the mixture can be effectively caused to meet the secondary oxidizer as soon as possible. It is understood that the fuel combustion will be completed in the vicinity of the beam more rapidly.
The bracket 136, and accordingly the holes 160, can be further positioned at any location/height in the side walls of said beam according to the requirements or as desired.

Fig. 5B illustrates a variant embodiment 107 of the beam from Fig. 5A, in which the bracket 136 is manufactured as one piece, such as discussed above.

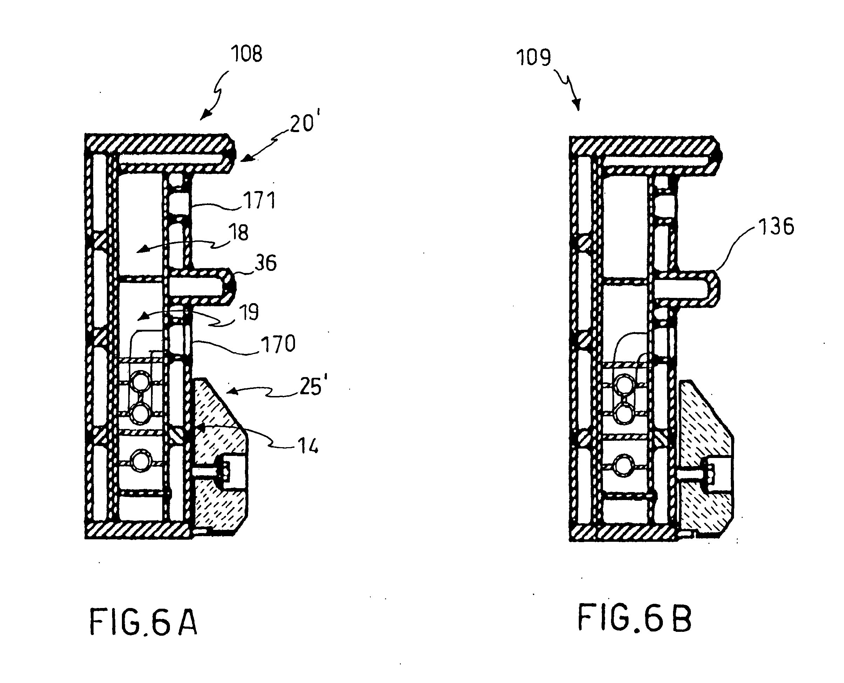

Fig. 6A illustrates a fifth embodiment of the invention in which the beam 108 is similar to the beam 102 from Fig. 3B. The beam 107, or semi-beam, has a cross-sectional semi-T shape as the beam 102, but it is different from beam 102 substantially by the location of the first holes 170 in the side wall 14 for delivering the fuel/oxidizer mixture. As with the beam from Fig. 5A and 5B, said first holes 170 are, in fact, placed in the vicinity of the second holes 171 for delivering the secondary oxidizer for the same reason as discussed above. Also in this case, a bracket 36'' is interposed between the two holes 170 and 171.

Fig. 6B illustrates a variant embodiment of the beam from Fig. 6A, the beam 109 being different because the bracket 136 is manufactured as one piece.

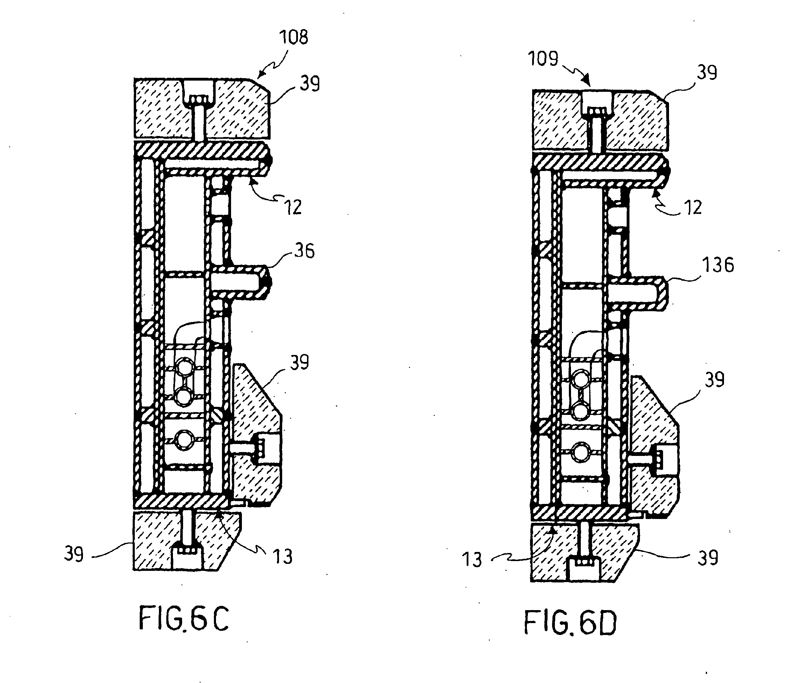

Fig. 6C is a variant embodiment of Fig. 6A in which the beam 108 is similar to the beam from Fig. 6A and comprises, in addition, refractory material which is also secured to the upper 12 and lower 13 walls of the beam.

Fig. 6D is a variant embodiment of Fig. 6B in which the beam 109 is similar to the beam from said Fig. 6B and comprises, in addition, refractory material which is also secured to the upper 12 and lower 13 walls of the beam.

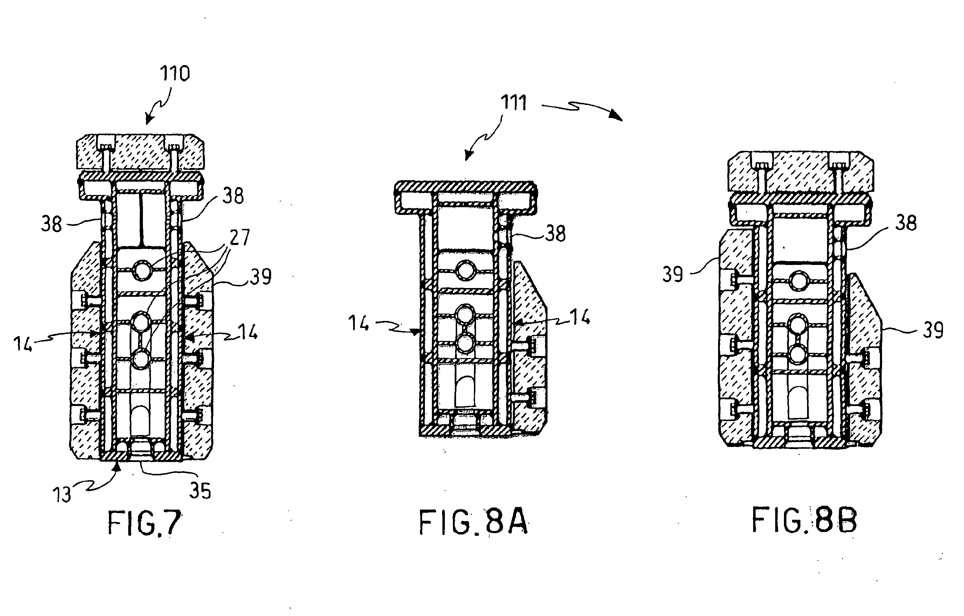

Fig. 7A illustrates a sixth embodiment of the invention in which the beam 110 is similar to the beam 104 from Fig. 4A. The beam 110 is different from the beam 104 in that the lower space 19 houses only a set of lances 27. Consequently, the vertical inner wall 24 has been removed and the first holes 35 for delivering the fuel/primary oxidizer mixture that are formed in the lower wall 13 of the beam are a single array. It should be noted that second holes 38 for delivering secondary oxidizer are still formed in both side walls 14 of the beam 110. This particular technical solution of the inventive beam advantageously allows reducing the overall dimensions when a beam with lances is used for delivering a powder fuel. Furthermore, the provision of holes for the secondary oxidizer on both walls of the beam allows delivering and considerably enriching the fuel/primary oxidizer mixture all around the beam.

Fig. 8A is a seventh embodiment of the inventive beam. Particularly, the beam 111 is similar to the beam from Fig. 7A but is different because it lacks second holes 38 on one of the two side walls 14 of the beam.

Fig. 7B is a variant embodiment of the beam 111 from Fig. 7A in which the outer surface of the beam is covered by the same covering material 39 as described above.

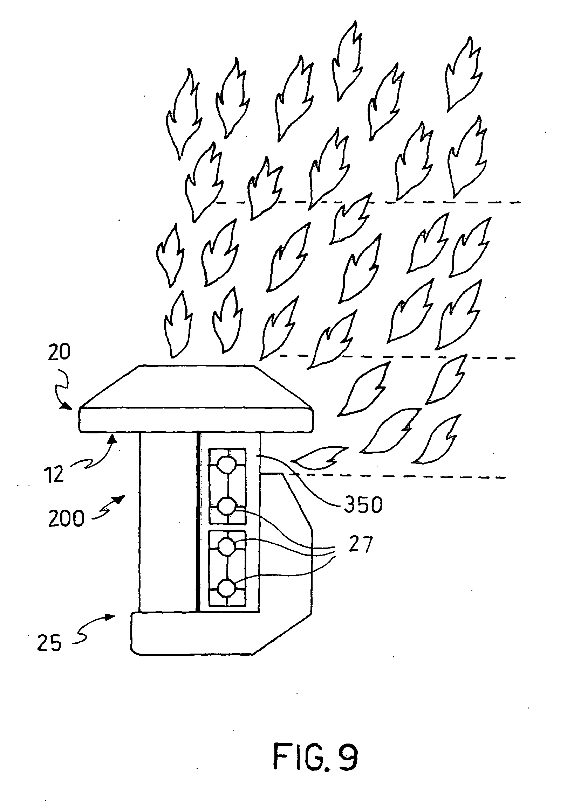

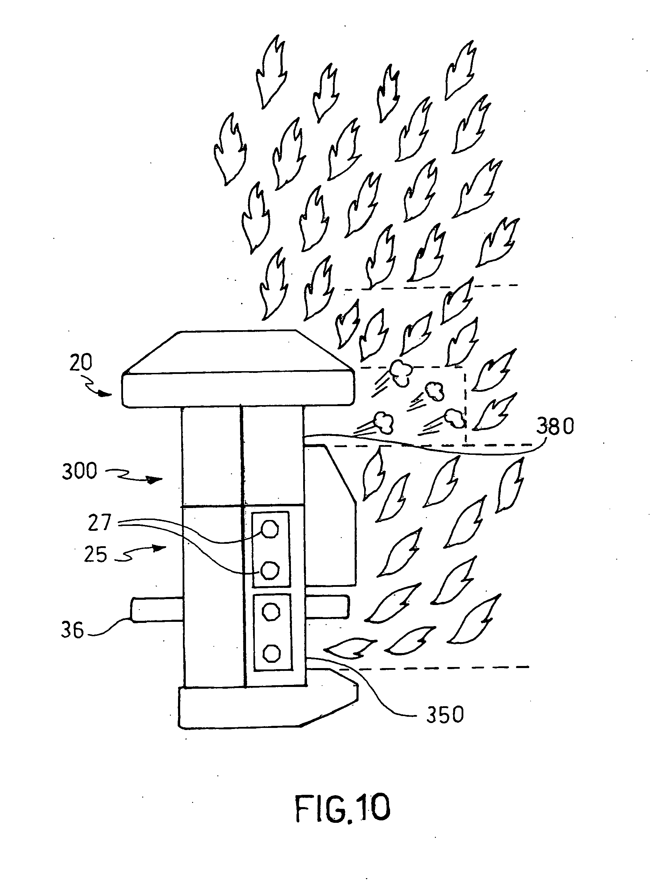

The operation of the beam in accordance with the present invention will be now detailed with reference to Fig. 9 and 10.

Particularly, Fig. 9 schematically illustrates the operation of a beam according to the prior art. The beam is indicated with the numeral 200 and the parts in common with the structure of the inventive beams have the same numerals.

It should be noted that, below the beam 200 and along the sides up to the outlet of the fuel/oxidizer mixture feed hole 350, the combustion temperature (represented with a flame) reaches a value which depends on the temperature of the materials that have been blown by the hot fumes from the lower level beams, which rise due to the depressurization within the kiln. Of course, the more the gases rise, the more they tend to be cooled since they release heat to the material, which, vice versa, moves downwards. On the contrary, at said holes 350, the combustion temperature (which is illustrated with two flames) will be higher, since it is in the vicinity of the combustion ignition. By moving upwards, the temperature tends to increase further (such as represented by the three flames), since the fuel is more and more burned until it is exhausted. The peak temperature is reached, accordingly, at a determined distance from the head 20 of the beam 200.

It should be understood, as also demonstrated by the above mathematical models, that the distribution of the temperature within the kiln can be subjected to relatively considerable variations resulting in the nonuniform burning of the treated materials.

As shown in Fig. 10, the burning problem is solved by the burner beams of the present invention. In Fig. 10, there is outlined the beam 300, the surrounding temperature levels being indicated with flames, as above. It will be immediately appreciated that the temperature distribution is much more uniform right because second holes 380 have been arranged for delivering secondary oxidizer above a fuel/primary oxidizer mixture delivery hole 350. In fact, it should be noted that at the lower wall 13 of beam 300 the combustion temperature is high (two flames), because of the occurrence of the combustion ignition and is maintained substantially as such until the head 20 of the beam. Here, the temperature is subjected to a relative cooling (one flame) since the portion of fuel which has not completed combustion is blown by the secondary oxidizer flowing out of the further holes 32. The fuel combustion is completed almost immediately, already above the beam head, such that the peak operating temperature (three flames) is developed.

Consequently, the burner beam of the invention advantageously allows creating a column of combustion temperatures which is substantially uniform to ensure as much uniform burning of the materials to be treated.

Accordingly, a second object of the invention is to provide a method for controlling the combustion reaction in a burning kiln for a lump material comprising feeding a fuel/oxidizer mixture with a low amount of oxidizer in an area of said second kiln and feeding oxidizer in a second area of this kiln downstream of the first area according to the direction of flow of said mixture.

Furthermore, feeding the mixture in the first area can be carried out with an oxidizer amount ranging between 50% and 80% of the total oxidizer being required for complete fuel combustion, whereas the feeding of the oxidizer in the second area can range between 50% and 20% of the total oxidizer being required for said combustion.

Particularly, the fuel that can be used is a liquid, gaseous or powder fuel, or a mixture thereof. Among liquid fuels, naphtha can be for example used, whereas among gaseous fuels, methane can be used, and among powder fuels, coal can be used.

The preferred oxidizer is the air blown into the kiln from outside, which can be optionally pre-heated by means of a heat exchanger in which the hot fumes being sucked in the apex portion of the kiln are caused to pass. Alternatively, said air can be pre-heated by causing the same to pass through a heat exchanger for the diathermic oil of the cooling system of the burner beams. Furthermore, the air can be cooling air which is heated by passing through the cooling area of the kiln and comes pre-heated to the beam.

Feeding the oxidizer to the second area can be carried out substantially with the same type of procedures as described above in paragraph 0066.

Preferably, the direction of the flow of the fuel/oxidizer mixture is from the top down.

Advantageously, in addition, feeding the fuel/oxidizer mixture with a low content of oxidizer to a first area of the kiln and feeding the oxidizer in a second area of said kiln is carried out by any of the burner beams described above.

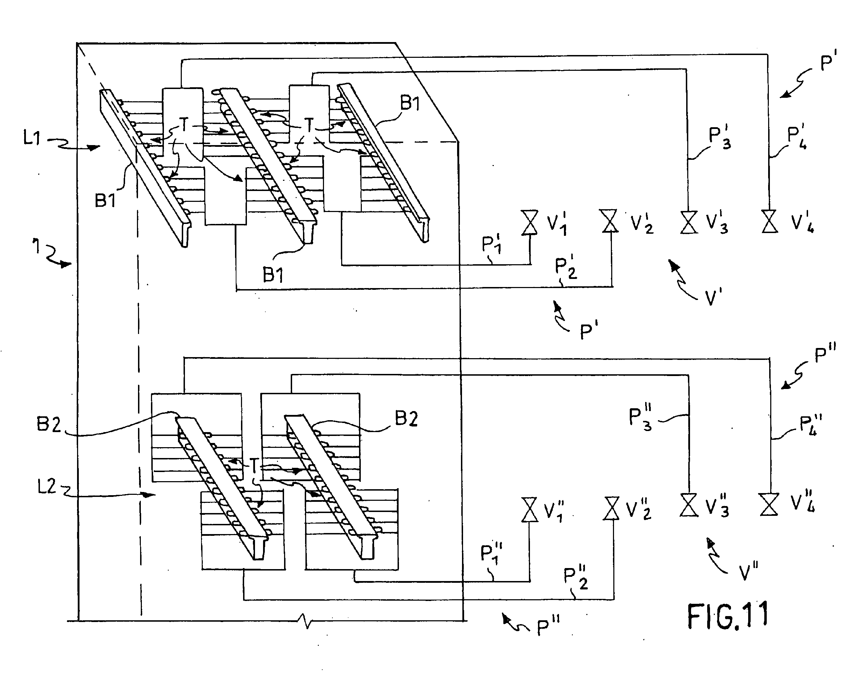

With reference to Fig. 11, the numeral 1 is a simplified embodiment of a portion of a calcination kiln. The kiln 1 is provided with burner beams B connected to a fuel delivery control system. Particularly, said system comprises a set V' of valves V'1, V'2, V'3, V'4 for a level L1 of burner beams and a set V'' of other valves V''1, V''2, V''3, V''4 for a further level L2 of burner beams. Furthermore, each valve is connected with beams of the corresponding level by means of its own fuel delivery line P'1, P'2, P'3, P'4 and P''1, P"2, P"3, P"4.

Considering the first level L1 of burner beams B, each valve V'1, V'2, V'3 and V'4 is located on a corresponding line P'1, P'2, P'3 and P'4 which simultaneously supplies the lance T placed on two facing sides of immediately subsequent beams B. Furthermore, advantageously, each line P' with the respective valve V' is connected only with half of the lances T of the beams B.

Thereby, each valve V' controls the flow of the fuel released in the space comprised between two halves of two immediately consecutive beams.

In other words, with said system the delivery of the fuel can be controlled for those lances placed on the sides of two immediately consecutive beams, said sides facing each other.

Similarly, the burner beams B of level L2 are connected to valves V'' by means of the delivery lines P''. Particularly, in this case, each valve V'' is placed on a line P'' which simultaneously supplies the lances T located on both sides of the same beam B. Preferably, said line supplies half the lances of two beams.

From what has been described above, it should be understood that each beam can be divided in at least two portions containing fuel lances that are separately controlled. This arrangement allows adjusting the fuel delivery in distinct parts of the beam such that the combustion level can be, in turn, adjusted in various parts of the kiln.

A further advantage is that, if the beams that are arranged on multiple levels are offset, i.e. they are not on the same vertical axis such as illustrated in Fig. 11, said adjustment can be also coordinated between beams in different levels. In fact, the beams B of level L2 are located along a vertical axis placed between two vertical axes of two beams B of level L1. In this configuration, the control carried out by the valve V'1 through the line P'1 on the respective portions of the beams of level L1 can be coordinated with the control carried out by the valve V''1 through the line P''1 on the respective beam portions of level L2. This adjustment has the advantage that a homogeneous combustion column is created along the axis of kiln 1.

In addition, the cross section of the kiln can be ideally divided in a number portions, for example four as in Fig. 11, in which said adjustment can be varied according to particular requirements or preferences. As described above, in the case where the kiln is subjected to the atmospheric agents only on one part of the external wall, the fuel control can be modified in said part for balancing possible influences on the combustion temperature inside the kiln.

Similarly, said adjustment system can be also adopted to control the flow of the oxidizer that has to be supplied to the burner beam lances. The system can thus provide control valves on dedicated supply lines and a delivery line parallel to the one described above.

## Claims

1. A burner beam (10; 101; 102; 103; 104; 105; 106; 107; 108; 109; 110; 111) comprising fuel feeding means (27) that are directly coupled with first oxidizer feeding means (29) for feeding a fuel/oxidizer mixture with a low amount of oxidizer and second means (38) for feeding further oxidizer, **characterized in that** said second means (38) for feeding further oxidizer are separated and placed downstream of said fuel feeding means and said first oxidizer feeding means according to the flow of said mixture such that the fuel/oxidizer mixture is enriched.

2. The burner beam (10; 101; 102; 103; 104; 105; 106; 107; 108; 109; 110; 111) according to claim 1, wherein said beam comprises a box element (11) extending along an axis (Y-Y) and is internally divided by a longitudinal horizontal partition wall (17) in a first empty space (18) and a second space (19) suitable to house said fuel feeding means (27) and said first oxidizer feeding means (29).

3. The burner beam (10; 101; 102; 103; 104; 105; 106; 107; 108; 109; 110; 111) according to claim 1 or 2, wherein said fuel feeding means (27) comprise lances.

4. The burner beam (10; 101; 102; 103; 104; 105; 106; 107; 108; 109; 110; 111) according to any claim 1 to 3, wherein said first oxidizer feeding means (29) comprise chambers suitable to house said fuel feeding means (27).

5. The burner beam (10; 101; 102; 103; 104; 105; 106; 107; 108; 109; 110; 111) according to any claim 1 to 4, further comprising gaps (26) that are formed on the outer surface thereof for allowing a cooling fluid to pass therethrough.

6. The burner beam (10; 101; 104; 106; 107; 110; 111) according to any claim to 5, wherein the cross section thereof is substantially T-shaped with a head (20) and a stem (25).

7. The burner beam (102; 103; 105; 108; 109) according to any claim 1 to 5, wherein the cross section thereof is substantially half-T-shaped with head (20') and stem (25').

8. The burner beam (10; 101; 102; 103; 104; 105; 106; 107; 108; 109; 110; 111) according to any claim 4 to 7, further comprising spacers (30) for spacing said chambers (29) within said second space (19) of the beam.

9. The burner beam (10; 101; 102; 103; 104; 105; 106; 107; 108; 109 ; 110 ; 111) according, to any claim 4 to 8, further comprising further spacers (33) which are mounted within said chambers (29) for avoiding that said fuel feeding means (27) may come in contact with the chamber walls.

10. The burner beam (10; 101; 102; 103; 104; 105; 106; 107; 108; 109; 110; 111) according to any claim 1 to 9, further inserting means (32) for facilitating the insertion or removal of said fuel feeding means (27) within said beam.

11. The burner beam (10; 101; 102; 103; 104; 105; 106; 107; 108; 109; 110; 111) according to any claim 1 to 10, comprising an upper wall (12), a lower wall (13), two side walls (14) , a front wall (15) and a rear wall (16).

12. The burner beam (10; 101; 102; 103; 106; 107; 108; 109) according to claim 11, wherein said fuel feeding means (27) comprise open ends (34) at first holes (35) corresponding to the outlets of said first oxidizer feeding means (29) being formed on said side walls (14).

13. The burner beam (104; 105; 110; 111) according to claim 11, wherein said fuel feeding means (27) comprise open ends (34) at first holes (140;150) corresponding to the outlets of said first oxidizer feeding means (29) being formed on said side wall (13) of said beam.

14. The burner beam (10; 101; 102; 103; 104; 105; 106; 107; 108; 109; 110; 111) according to any claim 11 to 13, wherein said second oxidizer feeding means (29) are opened to the outside of the beams through second holes (38) being formed on said side walls (14) in the vicinity of said upper wall (12).

15. The burner beam (10; 101; 102; 103; 104; 105; 106; 107; 108; 109; 110; 111) according to claim 14, wherein said second holes (38) are formed in the vicinity of the head (20) of the beam.

16. The burner beam (10; 101; 102; 103) according to claim 14 or 15, wherein said first holes (35) are positioned away from said second holes (38) and separated by a bracket (36) being interposed therebetween, which projects from said side walls (14).

17. The burner beam (106; 107; 108; 109) according to claim 14 or 15, wherein said first holes (35) are positioned in the vicinity of said second holes (38) and separated by a bracket (36) which projects from said side walls (14).

18. The burner beam (10; 101; 102; 103; 104; 105; 106; 107; 108; 109; 110; 111) according to any claim 1 to 17, further comprising covering material (39) secured on the outer surface of said beam.

19. The burner beam (101; 103 ; 107; 109) according to any claim 16 to 18, wherein said bracket is formed as one piece.

20. A method for controlling the combustion reaction in a burning kiln for a lump material comprising feeding a fuel/oxidizer mixture with a low amount of oxidizer in a first area of said kiln and feeding oxidizer in a second area of this kiln downstream of the first area according to the flow direction of said mixture **characterised in that** the feeding of the fuel/oxidizer fixture with a low content of oxidizer in a first area of the kiln and the feeding of the oxidizer in a second area of said kiln is carried out by means of any of the burner beams in accordance with any claim 1 to 19.

21. The method according to claim 20, wherein the feeding of the mixture in the first area can be carried out with an oxidizer amount ranging between 50% and 80% of the total oxidizer being required for complete fuel combustion, whereas the feeding of the oxidizer in the second area can range between 50% and 20% of the total oxidizer being required for said combustion.

22. The method according to claim 20 and 21, wherein the fuel that can be used is a liquid, gaseous or powder fuel, or a mixture thereof.

23. The method according to any claim 20 to 22, wherein the oxidizer is air, optionally air pre-heated through a heat exchanger where hot fumes are caused to pass, which are sucked in the apex portion of the kiln or through cooling air which is heated when passing through the lower area of the kiln.

24. The method according to any claim 20 to 23, wherein the feeding of the fuel in the second area can be carried out substantially with the same type of oxidizer in accordance with claim 22 or 23.

25. The method according to any claim 20 to 24, wherein the flow direction of the fuel/oxidizer mixture is from the top to the bottom of the kiln.

26. The method according to any claim 20 to 25, further comprising a fuel/oxidizer delivery control step by controlling the fuel/oxidizer flow for lance sets in different beam portions.

27. The method according to claim 26, wherein said control step comprises controlling the fuel/oxidizer flow simultaneously for lances located on two facing sides of immediately consecutive beams.

28. The method according to claim 26, wherein said control step comprises controlling the fuel/oxidizer flow simultaneously for lances located on both sides on the same beam.

29. The method according to claim 27 or 28, wherein said control is carried out in a differentiated manner in each half beam.

30. The method according to claim 29, wherein said control is carried out along a vertical axis of the kiln such that the lance of half beams being on the same axis are controlled to obtain a homogeneous vertical flow.

31. A fuel/oxidizer control and delivery system in lance (T) of burner beams (B) for kilns (1) for burning lump material, comprising at least two valves (V'1, V'2, V'3, V'4) placed on corresponding fuel/oxidizer delivery lines (P'1, P'2, P'3, P'4), said lines supplying lances (T) placed on two facing sides of immediately consecutive beams arranged on a level (L1) of the kiln
**characterised in that** said beams (B) are burner beams according to any claim 1 to 19.

32. The system according to claim 31, wherein said lines (P'1, P'2 , P'3 , P'4) supply each half of the lances (T) of the beams (B) such that different control portions are created on the cross section of the kiln.

33. The system according to claim 31 or 32, further comprising at least two further valves (V''1, V"2, V"3, V''4) placed on corresponding further fuel/oxidizer delivery lines (P"1, P"2 , P"3 , P"4), said lines simultaneously supplying lances (T) placed on both sides of the same beam (B) , said beam being placed on a further level(L2).

34. The system according to claim 33, wherein said lines (P"1, P"2, P''3, P"4) supply each half of the lances (T) of the beams (B) such that different control portions are created on the cross section of the kiln.

35. A method for controlling and commanding the delivery of fuel and/or oxidizer in lances of burner beams according to any claim 1 to 19 for kilns for burning lump material, comprising a fuel and/or oxidizer flow control step in an individual manner differentiated for lances or sets of lances in different positions in the beam.

## Patentansprüche

1. Brennerträger (10; 101; 102; 103; 104; 105; 106; 107; 108; 109; 110, 111), enthaltend Brennstoffzuführeinrichtungen (27), die direkt mit ersten Oxidationsmittel-Zuführeinrichtungen (29), die ein Brennstoff-/Oxidationsmittelgemisch mit einer geringen Menge des Oxidationsmittels zuführten, und zweiten Einrichtungen (38) verbunden sind, die weiteres Oxidationsmittel zuführen, **dadurch gekennzeichnet, dass** die zweiten Einrichtungen (38), die weiteres Oxidationsmittel zuführen, getrennt sind und stromabwärts der Brennstoffzuführeinrichtungen und der ersten Oxidationsmittel-Zuführeinrichtungen gemäß der Strömung des Gemisches angeordnet sind, so dass das Brennstoff-/Oxidationsmittelgemisch angereichert wird.

2. Brennerträger (10; 101; 102; 103; 104; 105; 106; 107; 108; 109; 110, 111) nach Anspruch 1, bei dem der Träger ein Kastenelement (11) enthält, das sich entlang einer Achse (Y-Y) erstreckt und im Inneren durch eine längliche horizontale Trennwand (17) in einen ersten Leerraum (18) und einen zweiten Leerraum (19) unterteilt ist, die sich dazu eignen, die Brennstoffzuführeinrichtungen (27) und die ersten Oxidationsmittel-Zufüftreinrichtungen (29) aufzunehmen.

3. Brennerträger (10;101;102; 103; 104; 105; 106; 107; 108; 109; 110,111) nach Anspruch 1 oder 2, bei dem die Brennstoffzuführeinrichtungen (27) Lanzen enthalten.

4. Brennerträger (10; 101; 102; 103; 104; 105; 106; 107; 108; 109; 110, 111) nach einem der Ansprüche 1 bis 3, bei der die ersten Oxidationsmittel-Zuführeinrichtungen (29) Kammern enthalten, die sich dazu eigenen, die Brennstoffzuführeinrichtungen (27) aufzunehmen.

5. Brennerträger (10; 101; 102; 103; 104; 105; 106; 107; 108; 109; 110, 111) nach einem der Ansprüche 1 bis 4, weiterhin enthaltend Zwischenräume (26), die auf dessen Außenoberfläche ausgebildet sind und es einem Kühlfluid gestatten, diese zu durchlaufen.

6. Brennerträger (10; 101; 104; 106; 107; 110; 111) nach einem der Ansprüche 1 bis 5, wobei dessen Querschnitt im wesentlichen T-förmig mit einem Kopf (20) und einem Schaft (25) ist.

7. Brennerträger (102; 103; 105; 108; 109;) nach einem der Ansprüche 1 bis 5, wobei dessen Querschnitt im wesentlichen halb T-förmig mit einem Kopf (20') und einem Schaft (25') ist.

8. Brennerträger (10; 101; 102; 103; 104; 105; 106; 107; 108; 109; 110, 111) nach einem der Ansprüche 4 bis 7, weiterhin enthaltend Abstandshalter (30), die die Kammern (29) innerhalb des zweiten Raumes (19) des Trägers auf Abstand halten.

9. Brennerträger (10; 101; 102; 103; 104; 105; 106; 107; 108; 109; 110, 111) nach einem der Ansprüche 4 bis 8, weiterhin enthaltend weitere Abstandshalter (33), die in den Kammern (29) angebracht sind, um zu vermeiden, dass die Brennstoffzuführeinrichtungen (27) mit den Kammerwänden in Berührung kommen.

10. Brennerträger (10; 101; 102; 103; 104; 105; 106; 107; 108; 109; 110, 111) nach einem der Ansprüche 1 bis 9, weiterhin enthaltend Einführeinrichtungen (32), die das Einführen oder das Entnehmen der Brennstoffzuführeinrichtungen (27) in dem Träger erleichtert.

11. Brennerträger (10; 101; 102; 103; 104; 105; 105; 107; 108; 109; 110, 111) nach einem der Ansprüche 1 bis 10, enthaltend eine obere Wand (12), eine untere Wand (13), zwei Seitenwände (14), eine vordere Wand (15) und eine hintere Wand (16).

12. Brennerträger (10; 101; 102; 103; 106; 107; 108; 109;) nach Anspruch 11, bei dem die Brennstoffzuführeinrichtungen (27) offene Enden (34) an ersten Löchern (35) entsprechend den Auslässen der ersten Oxidationsmittef-Zuführeinrichtungen (29) enthaltend, die in den Seitenwänden (14) ausgebildet sind.

13. Brennerträger (104; 105; 110, 111) nach Anspruch 11, bei dem die Brennstoffzuführeinrichtungen (27) offene Enden (34) an ersten Löchern (140; 150) entsprechend den Auslässen der ersten Oxidationsmittel-Zuführeinrichtungen (29) enthalten, die in der Seitenwand (13) des Trägers ausgebildet sind.

14. Brennerträger (10; 101; 102; 103; 104; 105; 106; 107; 108; 109; 110, 111) nach einem der Ansprüche 11 bis 13, bei dem die zweiten Oxidationsmittel-Zuführeinrichtungen (29) zur Außenseite der Träger durch zweite Löcher (38) geöffnet sind, die auf den Seitenwänden (14) in der Nähe der oberen Wand (12) ausgebildet sind.

15. Brennerträger (10; 101; 102; 103; 104; 105; 106; 107; 108; 109; 110, 111) nach Anspruch 14, bei dem die zweiten Löcher (38) in der Nähe des Kopfes (20) des Trägers ausgebildet sind.

16. Brennerträger (10; 101; 102; 103;) nach Anspruch 14 oder 15, bei dem die ersten Löcher (35) von den zweiten Löchern (38) entfernt angeordnet und durch eine Konsole (36) getrennt sind, die zwischen diesen angeordnet ist und von den Seitenwänden (14) hervorragt.

17. Brennerträger (106; 107; 108; 109) nach Anspruch 14 oder 15, bei dem die ersten Löcher (35) in der Nähe der zweiten Löcher (38) angeordnet und durch eine Konsole (36) getrennt sind, die von den Seitenwänden (14) hervorragt.

18. Brennerträger (10; 101; 102; 143; 104; 105; 106; 107; 108; 109; 110, 111) nach einem der Ansprüche 1 bis 17, weiterhin enthaltend ein Abdeckmaterial (39), das auf der Außennberfläche des Trägers befestigt ist.

19. Brennerträger (101; 103; 107; 109) nach einem der Ansprüche 16 bis 18, bei dem die Konsole als ein Stück ausgebildet ist.

20. Verfahren zum Steuern der Verhrerrnungsreaktion in einem Brennofen für ein klumpiges Material, umfassend das Zuführen eines Brennstoff-/Oxidationsmittelgemisches mit einer geringen Menge Oxidationsmittel in einem ersten Bereich des Ofens und Zuführen von Oxidationsmittel in einem zweiten Bereich dieses Ofens, stromabwärts des ersten Bereiches gemäß der Strömungsrichtung des Gemisches, **dadurch gekennzeichnet, dass** das Zuführen des Brennstoff /Oxidationsmittelgemisches mit einem geringen Gehalt von Oxidationsmittel in einem ersten Bereich des Ofens und das Zuführen von Oxidationsmittel in einem zweiten Bereich des Ofens mit Hilfe eines der Brennerträger gemäß Anspruch 1 bis 19 ausgeführt wird.

21. Verfahren nach Anspruch 20, bei dem das Zuführen des Gemisches im ersten Bereich mit einer Oxidationsmittelmenge im Bereich zwischen 50% und 80% des gesamten Oxidationsmittels erfolgen kann, das für eine vollständige Brennstoffverbrennung erforderlich ist, wohingegen das Zuführen des Oxidationsmittels in dem zweiten Bereich im Bereich zwischen 50% und 20% des gesamten Oxidationsmittels liegen kann, das für die Verbrennung erforderlich ist.

22. Verfahren nach Anspruch 20 und 21, bei dem der Brennstoff, der verwendet werden kann, ein flüssiger, gasförmiger oder pulverartiger Brennstoff oder eine Mischung daraus ist.

23. Verfahren nach einem der Ansprüche 20 bis 22, bei dem das Oxidationsmittel Luft ist, wahlweise Luft, vorgewärmt durch einen Wärmetauscher, den heißer Rauch durchläuft, der im Scheitelabschnitt des Ofens eingesaugt wird, oder durch Kühlluft, die erwärmt wird, wenn sie den tieferen Bereich des Ofens durchläuft.

24. Verfahren nach einem der Ansprüche 20 bis 23, bei dem das Zuführen des Brennstoffes im zweiten Bereich im wesentlichen mit demselben Typ eines Oxidationsmittels gemäß Anspruch 22 oder 23 ausgeführt werden kann.

25. Verfahren nach einem der Ansprüche 20 bis 24, bei dem die Strömungsrichtung des Brennstoff-/Oxidationsmittelgemisches von der Oberseite zum Boden des Ofens verläuft.

26. Verfahren nach einem der Ansprüche 20 bis 25, weiterhin umfassend einen Brennstoff-/Oxidationsmittel-Fördersteuerschritt durch Steuern der Brennstoff-/Oxidationsmitteiströmung für Lanzensätze in unterschiedlichen Trägerabschnitten.

27. Verfahren nach Anspruch 26, bei dem der Steuerschritt das Steuern der Brennstoff-/Oxidationsmittelströmung gleichzeitig für Lanzen umfasst, die sich auf zwei gegenüberliegenden Seiten unmittelbar aufeinander folgender Träger befinden.

28. Verfahren nach Anspruch 26, bei dem der Steuerschritt das Steuern der Brennstoff/Oxidationsmittelströmung gleichzeitig für Lanzen umfasst, die sich auf beiden Seiten desselben Trägers befinden.

29. Verfahren nach Anspruch 27 oder 28, bei dem die Steuerung in jedem Halbträger auf unterschiedliche Art ausgeführt wird.

30. Verfahren nach Anspruch 29, bei dem die Steuerung entlang einer vertikalen Achse des Ofens derart ausgeführt wird, dass die Lanzen der Halbträger, die sich auf derselben Achse befinden, gesteuert werden, um eine homogene vertikale Strömung zu erreichen.

31. Brennstoff-/Oxidationsmittel-Steuer-und-Fördersystem in einer Lanze (T) von Brennerträgern (B) für Öfen (1) zum Verbrennen eines klumpigen Materials, enthaltend wenigstens zwei Ventile (V'1, V'2, V'3, V'4), die in entsprechenden Brennstoff-/Oxidationsmittel-Förderleitungen (P'1, P'2, P'3, P'4) angeordnet sind, wobei diese Leitungen Lanzen (T) versorgen, die auf zwei gegenüberliegenden Seiten unmittelbar aufeinander folgender Träger angeordnet sind, die sich auf einer Ebene (L1) des Ofens befinden, **dadurch gekennzeichnet, dass** die Träger (B) Brennerträger gemäß einem der Ansprüche 1 bis 19 sind.

32. System nach Anspruch 31, bei dem die Leitungen (P'1, P'2, P'3, P'4) jede Hälfte der Lanzen (T) der Träger (B) derart versorgen, dass unterschiedliche Steuerabschnitte im Querschnitt des Ofens erzeugt werden.

33. System nach Anspruch 31 oder 32, weiterhin enthaltend wenigstens zwei weitere Ventile (V"1, V"2, V"3, V"4), die in entsprechenden weiteren Brennstoff-/Oxidationsmittel-Förderleitungen (P"1, P"2, P"3, P"4) angeordnet sind, wobei diese Leitungen gleichzeitig Lanzen (T) versorgen, die auf beiden Seiten desselben Trägers (B) angeordnet sind, wobei sich der Träger auf einer weiteren Ebene (L2) befindet.

34. System nach Anspruch 33, bei dem die Leitungen (P"1, P"2, P"3, P"4) jede Hälfte der Lanzen (T) der Träger (B) derart versorgen, dass unterschiedliche Steuerabschnitte im Querschnitt des Ofens erzeugt werden.

35. Verfahren zum Steuern und Anweisen der Förderung von Brennstoff und/oder Oxidationsmittel in Lanzen von Brennerträgern nach einem der Ansprüche 1 bis 19 für Öfen zum Verbrennen von klumpigem Material, umfassend einen Brennstoff und/oder Oxidationsmittelströmungs-Steuerschritt in einer individuellen Art und Weise, die sich für Lanzen oder Sätze von Lanzen an unterschiedlichen Positionen im Träger unterscheidet.

## Revendications

1. Poutre de brûleur (10 ; 101 ; 102 ; 103; 104; 105; 106 ; 107; 108; 109 ; 110 ; 111) comprenant des moyens d'alimentation de carburant (27) qui sont directement couplés avec des premiers moyens d'alimentation d'oxydant (29) pour alimenter un mélange carburant/oxydant avec une faible quantité d'oxydant, et des seconds moyens (38) pour alimenter un oxydant supplémentaire,
**caractérisée en ce que** lesdits seconds moyens (38) pour alimenter un oxydant supplémentaire sont séparés et placés en aval desdits moyens d'alimentation de carburant et desdits premiers moyens d'alimentation d'oxydant en accord avec l'écoulement dudit mélange, de sorte que le mélange carburant/oxydant est enrichi.

2. Poutre de brûleur (10 ; 101 ; 102 ; 103 ; 104 ; 105 ; 10b ; 107 ; 108 ; 109 ; 110 ; 111) selon la revendication 1, dans laquelle ladite poutre comprend un élément en forme de boîte (11) qui s'étend le long d'un axe (Y-Y) et qui est divisée à l'intérieur par une paroi de cloisonnement horizontal longitudinal (17) en un premier espace vide (18) et un second espace (19) convenable pour abriter lesdits moyens d'alimentation de carburant (27) et lesdits premiers moyens d'alimentation d'oxydant (29).

3. Poutre de brûleur (10; 101 ; 102; 103 ; 104 ; 105 ; 106 ; 107; 108; 109 ; 110 ; 111) selon la revendication 1 ou 2, dans laquelle lesdits moyens d'alimentation de carburant (27) comprennent des lances.

4. Poutre de brûleur (10; 101 ; 102 ; 103 ; 104; 105; 106 ; 107; 108 ; 109 ; 110 ; 111) selon l'une quelconque des revendications 1 à 3, dans laquelle lesdits premiers moyens d'alimentation d'oxydant (29) comprennent des chambres qui conviennent pour abriter lesdits moyens d'alimentation de carburant (27).

5. Poutre de brûleur (10 ; 101; 102 ; 103 ; 104 ; 105 ; 106 ; 107 ; 108 ; 109 ; 110 ; 111) selon l'une quelconque des revendications 1 à 4, comprenant en outre des intervalles (26) qui sont formés sur sa surface extérieure pour permettre à un fluide de refroidissement de passer à travers ceux-ci.

6. Poutre de brûleur (10 ; 101 ; 104 ; 106 ; 107 ; 110 ; 111) selon l'une quelconque des revendications 1 à 5, dans laquelle la section transversale de celle-ci est sensiblement en forme de T avec une tête (20) et un pied (25).

7. Poutre de brûleur (102 ; 103 ; 105 ; 108 ; 109) selon l'une quelconque des revendications 1 à 5, dans laquelle la section transversale de celle-ci est sensiblement en forme de demi-T avec une tête (20') et un pied (25').

8. Poutre de brûleur (10 ; 101 ; 102 ; 103 ; 104 ; 105 ; 106 ; 107 ; 108 ; 109 ; 110 ; 111) selon l'une quelconque des revendications 4 à 7, comprenant en outre des écarteurs (30) pour écarter lesdites chambres (29) à l'intérieur dudit second espace (19) de la poutre.

9. Poutre de brûleur (10 ; 101 ; 102 ; 103 ; 104 ; 105 ; 105 ; 107 ; 108 ; 109 ; 110 ; 111) selon l'une quelconque des revendications 4 à 8, comprenant en outre d'autres écarteurs (33) qui sont montés à l'intérieur desdites chambres (29) pour éviter que lesdits moyens d'alimentation de carburant (27) puissent venir en contact avec les parois de la chambre.

10. Poutre de brûleur (10 ; 101 ; 102 ; 103 ; 104 ; 105 ; 106 ; 107 ; 108 ; 149 ; 110 ; 111) selon l'une quelconque des revendications 1 à 9, comprenant en outre des moyens d'insertion (32) pour faciliter l'insertion ou l'enlèvement desdits moyens d'alimentation de carburant (27) à l'intérieur de ladite poutre.

11. Poutre de brûleur (10 ; 101 ; 102 ; 103 ; 104 ; 105 ; 106 ; 107 ; 108 ; 109 ; 110 ; 111) selon l'une quelconque des revendications 1 à 10, comprenant une paroi supérieure (12), une paroi inférieure (13), deux parois latérales (14), une paroi avant (15) et une paroi arrière (16).

12. Poutre de brûleur (10 ; 101 ; 102 ; 103 ; 146 ; 107 ; 108 ; 109) selon la revendication 11, dans laquelle lesdits moyens d'alimentation de carburant (27) comprennent des extrémités ouvertes (34) au niveau de premiers trous (35) qui correspondent aux sorties desdits premiers moyens d'alimentation d'oxydant (29) qui sont formées sur lesdites parois latérales (14).

13. Poutre de brûleur (104 ; 145 ; 110 ; 111) selon la revendication 11, dans laquelle lesdits moyens d'alimentation de carburant (27) comprennent des extrémités ouvertes (34) au niveau de premiers trous (140 ; 150) qui correspondent aux sorties desdits premiers moyens d'alimentation d'oxydant (29) qui sont formées sur ladite paroi latérale (13) de ladite poutre.

14. Poutre de brûleur (10 ; 101 ; 102 ; 103 ; 104 ; 105 ; 106 ; 107 ; 108 ; 109 ; 110 ; 111) selon l'une quelconque des revendications 11 à 13, dans laquelle lesdits seconds moyens d'alimentation d'oxydant (29) sont ouverts vers l'extérieur des poutres via des seconds trous (38) qui sont formés sur lesdites parois latérales (14) au voisinage de ladite paroi supérieure (12).

15. Poutre de brûleur (10 ; 101 ; 102 ; 103 ; 104 ; 105 ; 106 ; 107 ; 108 ; 109 ; 110 ; 111) selon la revendication 14, dans laquelle lesdits seconds trous (38) sont formés au voisinage de la tête (20) de la poutre.

16. Poutre de brûleur (10 ; 101 ; 102 ; 103) selon la revendication 14 ou 15, dans laquelle lesdits premiers trous (35) sont positionnés en éloignement desdits seconds trous (38) et séparés par une platine (36) qui est interposée entre eux et qui se projette depuis lesdites parois latérales (14).

17. Poutre de brûleur (106 ; 107 ; 108 ; 109) selon la revendication 14 ou 15, dans laquelle lesdits premiers trous (35) sont positionnés au voisinage desdits seconds trous (38) et séparés par une platine (36) qui se projette depuis lesdites parois latérales (14).

18. Poutre de brûleur (10 ; 101 ; 102 ; 103 ; 104 ; 105 ; 106 ; 107 ; 108 ; 109 ; 110 ; 111) selon l'une quelconque des revendications 1 à 17, comprenant en outre un matériau de couverture (39) attaché sur la surface extérieure de ladite poutre.

19. Poutre de brûleur (101 ; 103 ; 107 ; 109) selon l'une quelconque des revendications 16 à 18, dans laquelle ladite platine est formée d'une seule pièce.

20. Procédé pour commander la réaction de combustion dans un four de combustion pour un matériau en morceaux, comprenant l'alimentation d'un mélange carburant/oxydant avec une faible quantité d'oxydant dans une première zone dudit four et l'alimentation d'oxydant dans une seconde zone dudit four en aval de la première zone selon la direction d'écoulement dudit mélange, **caractérisé en ce que** l'alimentation du mélange carburant/oxydant avec une faible teneur en oxydant dans une première zone du four et l'alimentation de l'oxydant dans une seconde zone dudit four est effectuée au moyen de l'une quelconque des poutres de brûleur selon l'une quelconque des revendications 1 à 19.

21. Procédé selon la revendication 20, dans lequel l'alimentation du mélange dans la première zone peut être effectuée avec une quantité d'oxydant allant entre 50 % et 80 % de l'oxydant total qui est requis pour une combustion complète du carburant, tandis que l'alimentation de l'oxydant dans la seconde zone peut aller entre 50 % et 20 % de l'oxydant total qui est requis pour ladite combustion.

22. Procédé selon la revendication 20 et 21, dans lequel le carburant qui peut être utilisé est un carburant liquide, gazeux ou en poudre, ou un mélange de ceux-ci.

23. Procédé selon l'une quelconque des revendications 20 à 22, dans lequel l'oxydant est de l'air, en option de l'air préchauffé via un échangeur de chaleur à travers lequel des fumées chaudes sont amenées à passer, qui sont aspirées dans la portion au sommet du four, ou via de l'air de refroidissement qui est chauffé lorsqu'il passe à travers la zone inférieure du four.

24. Procédé selon l'une quelconque des revendications 20 à 23, dans lequel l'alimentation du carburant dans la seconde zone peut être effectuée sensiblement avec le même type d'oxydant selon les revendications 22 ou 23.

25. Procédé selon l'une quelconque des revendications 20 à 24, dans lequel la direction d'écoulement du mélange carburant/oxydant va du sommet au fond du four.

26. Procédé selon l'une quelconque des revendications 20 à 25, comprenant en outre une étape de commande de fourniture carburant/oxydant en commandant le flux de carburant/oxydant pour des groupes de lances dans différentes portions de la poutre.

27. Procédé selon la revendication 26, dans lequel ladite étape de commande comprend de commander le flux de carburant/oxydant simultanément pour des lances situées sur deux côtés en vis-à-vis de poutres immédiatement consécutives.

28. Procédé selon la revendication 26, dans lequel ladite étape de commande comprend de commander le flux de carburant/oxydant simultanément pour des lances situées sur les deux côtés de la même poutre.

29. Procédé selon la revendication 27 ou 28, dans lequel ladite commande est effectuée d'une manière différenciée dans chaque demi-poutre.

30. Procédé selon la revendication 29, dans lequel ladite commande est effectuée le long d'un axe vertical du four de telle manière que les lances de demi-poutres qui sont sur le même axe sont commandées pour obtenir un flux vertical homogène.

31. Système de commande et de fourniture de carburant/oxydant dans des lances (T) de poutres de brûleur (B) pour des fours (1) destinés à la combustion de matériaux en morceaux, comprenant au moins deux valves (V'1, V'2, V'3, V'4) placées sur des lignes de fourniture correspondante carburant/oxydant (P'1, P'2, P'3, P'4), lesdites lignes alimentant des lances (T) placées sur deux côtés en vis-à-vis de poutres immédiatement consécutives agencées sur un niveau (L1) du four,
**caractérisé en ce que** lesdites poutres (B) sont des poutres de brûleur selon l'une quelconque des revendications 1 à 19.

32. Système selon la revendication 31, dans lequel lesdites lignes (P'1, P'2, P'3, P'4) alimentent chaque moitié des lances (T) des poutres (B) de sorte que différentes portions de commande sont créées sur la section transversale du four.

33. Système selon la revendication 31 ou 32, comprenant en outre au moins deux autres valves (V"1, V"2, V"3, V"4) placées sur d'autres lignes de fourniture carburant/oxydant correspondantes (P" 1, P"2, P"3, P"4), lesdites lignes alimentant simultanément des lances (T) placées sur les deux côtés de la même poutre (B), ladite poutre étant placée sur un autre niveau (L 2).

34. Système selon la revendication 33, dans lequel lesdites lignes (P"1, P"2, P"3, P"4) alimentent chaque moitié des lances (T) des poutres (B) de telle manière que différentes portions de commande sont créées sur la section transversale du four.

35. Procédé pour commander la fourniture de carburant et/ou d'oxydant dans des lances de poutres de brûleur selon l'une quelconque des revendications 1 à 19 pour des fours destinés à la combustion de matériaux en morceaux, comprenant une étape de commande de l'écoulement de carburant et/ou d'oxydant d'une manière individuelle et différenciée pour des lances ou des groupes de lances dans différentes positions dans la poutre.
